# EUROPEAN PATENT APPLICATION

(11) **EP 1 197 135 A1**
(43) Date of publication of application: **17.04.2002**
(21) Application number: 01203725.5
(22) Date of filing: 01.10.2001
(51) Int. Cl.: A01D 80/02

(54) **A device for racking crop**

(30) Priority: 10.10.2000 NL 1016376
(71) Applicant: Lely Enterprises AG, 6300 ZUG (CH)
(72) Inventor: van der Lely, Alexander, 3065 NA Rotterdam (NL); Koorn, Maarten, 3123 CP Schiedam (NL)
(74) Representative: Corten, Maurice Jean F.M.

(57) **Abstract**

A device for raking crop. The device is provided with at least one rake member (3) that is rotatable about an upwardly extending axis. The rake member comprises at least one tine arm (6) with a plurality of tines (8). The tine arm is provided with a weakened portion, said weakened portion (9) being such that the tine arm undergoes a permanent, plastic deformation at the place of the weakened portion when a certain load on the tine arm is exceeded. The plastic deformation is preferably constituted by a bending or rupture.

## Description

The present invention relates to a device for raking crop according to the preamble of claim 1.

Such a device is known for example from Dutch patent 1003745. During the use of such a device the tines, usually made from resilient material, cannot be prevented from bumping against an obstacle. This results in loads acting on the tine arm, in certain cases to such an extent that rupture of the tine arm occurs. During repair of the tine arm the device cannot be used.

It is an object of the present invention to provide a device for raking crop, said device being designed such that its useful life is prolonged.

For that purpose a device of the above-described type according to the invention comprises the measures according to the characterizing part of claim 1. The invention is based on the insight that with the known device the tine arm may break at any place. For example, rupture may occur in the drive or at a place which is very difficult to reach, which results in a considerably long repair time. When, according to the invention, there is provided a weakened portion in the tine arm, said weakened portion being such that the tine arm undergoes a permanent, plastic deformation at the place of the weakened portion when a certain load on the tine arm is exceeded, the place on the tine arm where the tine arm plastically deforms will be more precisely defined.

British patent 450.535 discloses tine-carrying arms which are rotatable about an axis. The tine arms are fastened to a cross beam, said cross beam being disposed on the lower end of the axis, in such a manner that the arms are capable of moving upwards and downwards within limits and are yieldable to the forces generated by the tines. The upward and downward movements are achieved by means of bores of sufficient dimensions provided in the tine arms. However, said British patent only describes an elastic and not a plastic deformation of the tine arm.

From European patent application 0 616 761 there is known a construction in which the tine arm undergoes a flexible bending during operation, the arrangement being such that permanent deformations are counteracted. Consequently, said European patent application discloses means for counteracting a permanent deformation and not means causing a permanent, plastic deformation to take place at a defined place on the tine arm.

The plastic deformation is preferably constituted by a bending or rupture.

The time required for repair of a tine arm for example in consequence of rupture can be shortened when the weakened portion is provided at a place which is easily accessible in the event of a repair.

In particular when the tine arm comprises a first sleeve-shaped portion and a second tine-arm-carrying portion, the tine-arm-carrying portion being partially located in the sleeve-shaped portion, in case of a permanent, plastic deformation, such as bending or rupture, considerable problems may arise when the rupture occurs in the sleeve-shaped portion or in the part of the tine-arm-carrying portion that is located inside the sleeve-shaped portion. In that case the weakened portion is preferably provided in that part of the tine-arm-carrying portion that is located outside the sleeve-shaped portion.

The weakened portion preferably comprises at least one bore, and additionally or alternatively at least one groove. Such a weakened portion can easily be provided in the known devices. Besides it is also possible to achieve the weakened portion by means of a thinner wall thickness in the tine arm, or in that at the place of the weakened portion the carrying arm has other material characteristics than the rest of the tine arm.

In order to prevent that e.g. in case of rupture a part of the tine arm bumps against the device or moves away from the device in an uncontrolled manner, which might cause dangerous situations, there is provided a security means on the tine arm, which security means bridges the weakened portion. Said security means may be constituted by a chain or a hinge.

The invention will be explained hereinafter in further detail with the aid of an embodiment shown in the accompanying drawings, in which
Figure 1 is a schematic plan view of a machine according to the invention, and
Figure 2 shows a tine arm provided with a weakened portion according to the invention, and the loads acting on the tine arm in the form of a diagram.

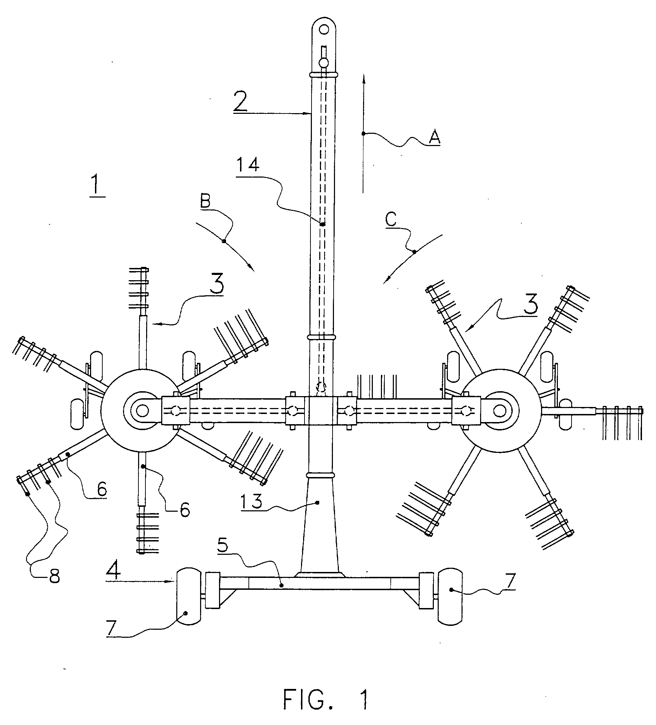

Figure 1 shows a device 1 for raking crop. Said device 1 is provided with a drawbar 2 which is capable of being coupled with a tractor and which is supported by a wheel set 4 near the rear side of the, in the embodiment shown, two rotating rake members 3 (hereinafter also called rotors). However, it will be obvious that any other number of rake members is possible. Via arms that are pivotably connected with the drawbar 2, the rotors 3 can be pivoted to a transport position in which the rotors 3 are arranged substantially vertically. Each of the arms is shiftable in a telescopic manner, such that the outside of the swath deposited by the rotors 3, measured horizontally and transversely to the direction of travel A, is located e.g. maximally one meter and a half from the drawbar 2. The wheel set 4 has a bridge 5 which is orientated transversely to the direction of travel A and which is provided near its ends with downwardly extending supports for wheels 7. In Figure 1 the rake device 1 is designed as a central delivery rake.

At least the rear half 12, 13 of the drawbar 2, at least from the part where the imaginary circles described by the rotors 3 approach each other closely, is designed so as to be at such a level that the tines or rake elements 8 of a rotor 3 and raked crop can pass thereunder.

In the rake device 1 there is provided a drive shaft 14 for driving the rotors 3, which drive shaft 14 is capable of being coupled with the power take-off shaft of a tractor. For that purpose the rake device 1 may be provided with a gearbox having an exit in rearward direction. As a result thereof the drive of the rake device 1 can be transmitted, e.g. via a coupling shaft, to a machine to be coupled with the rake device 1.

The operation of the rake device 1 is characterized in that crop lying scattered on the ground is raked by the rotors 3 towards the middle of the rake device 1 and is deposited there in a swath. Said swath can be taken from the ground by a loading device and be transported to and deposited at a place outside the working width of the rake device 1. This has the advantage that the crop is displaced across the ground maximally over half of the machine, which considerably limits the risk of contamination with earth or clods. Nevertheless the rake device 1 shown in Figure 1 has the possibility, by turning at the end of a working run, to deposit the material raked together during two working runs in one swath. This enables a very efficient use of successive machines, e.g. bale presses or loading wagons. The rake device 1 has also the advantage of being employable as a central delivery rake when this is desirable, e.g. in the situation of a lighter tractor. This increases the possibilities of maximum and flexible use of the machinery of wage workers.

During operational use of the rake device 1 the tines 8, usually made from resilient material, may bump against an obstacle. This results in loads acting on the tine arm 6, in certain cases to such an extent that bending or even rupture of the tine arm 6 occurs. According to the invention a weakened portion 9 is provided in the tine arm 6, so that a defined occurrence of a permanent, plastic deformation, such as a bending or rupture, in the tine arm 6 is achieved, as will be elucidated hereinafter.

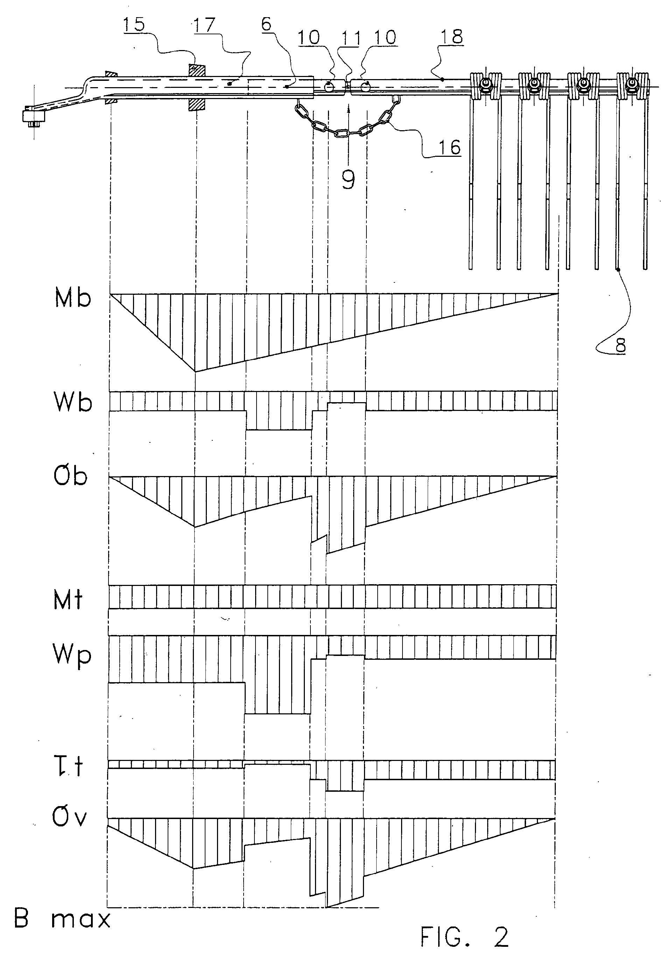

Figure 2 gives an impression of the loads acting on a tine arm 6 during operation of the rake device 1. Figure 2 depicts a tine arm 6 with tines 8 and the load behaviour associated therewith. In the diagram shown M_{b} represents the bending moment behaviour which reaches its maximum value at a supporting point 15. Mₜ represents a constant moment of torsion. The strength modulus of resistance against bending W_{b} and the strength modulus of resistance against torsion Wₚ depend inter alia on the diameter of the tine arm 6. From these moduli/moments the bending stress σ_{b} and the torsional stress τₜ can be calculated according to the equations: σ_{b} = M_{b}/W_{b} and τₜ = Mₜ/Wₚ.

From the bending stress and the torsional stress the ideal stress σᵥ can be determined according to the formula of Bach (see Dubbel, Taschenbuch für den Maschinenbau, 13. Auflage page 424). As results from this ideal stress, a maximum load Bₘₐₓ occurs at the place of the weakened portion 9. At or near this point the tine arm 6 will undergo a plastic deformation, such as e.g. a rupture, when a certain value of the load on the tine arm 6 is exceeded.

The weakened portion 9 may be designed such that the tine arm 6 will undergo the permanent deformation at the place of the weakened portion 9, for example will bend or break at the place of the weakened portion, when a certain load on the tine arm is exceeded. Thus the time required for repair of a tine arm in consequence of bending or rupture can be shortened by choosing the place of the weakened portion 9 as a place which is easily accessible.

The weakened portion preferably comprises at least one bore 10, and additionally or alternatively at least one groove 11. Besides it is also possible to achieve the weakened portion by means of a thinner wall thickness in the tine arm 6. At the place of the weakened portion the tine arm may also have other material characteristics than the rest of the tine arm.

Across the weakened portion 9 there is preferably provided a security means 16 on the tine arm 6, which security means 16 bridges the weakened portion 9. This makes it possible to prevent a part of the tine arm 6, in the event of bending or rupture, from bumping against the device and causing there considerable damage. Moreover a knocked off piece of tine arm can thus be prevented from causing dangerous situations. Such a security means may be constituted by a cable, but is preferably constituted by a chain or a hinge.

In particular when the tine arm 6 comprises a first sleeve-shaped portion 17 and a second tine-arm-carrying portion 18, the tine-arm-carrying portion 18 being partially - preferably removably - located in the sleeve-shaped portion 17, in case of a bending or rupture considerable problems may arise when said rupture occurs in the sleeve-shaped portion 17 or in the part of the tine-arm-carrying portion 18 that is located inside the sleeve-shaped portion 17. In that case the weakened portion 9 is preferably provided in the tine-arm-carrying portion 18 that is located outside the sleeve-shaped portion 17.

## Claims

1. A device (1) for raking crop, which device (1) is provided with at least one rake member (3) that is rotatable about an upwardly extending axis, said rake member (3) comprising at least one tine arm (6) with a plurality of tines (8), **characterized in that** the tine arm (6) is provided with a weakened portion (9), said weakened portion being such that the tine arm (6) undergoes a permanent, plastic deformation at the place of the weakened portion (9) when a certain load on the tine arm (6) is exceeded.

2. A device as claimed in claim 1, **characterized in that** the plastic deformation is constituted by a bending or rupture.

3. A device (1) as claimed in claim 1 or 2, **characterized in that** the weakened portion (9) is provided at a place which is easily accessible in the event of a repair.

4. A device (1) as claimed in any one of the preceding claims, **characterized in that** the tine arm (6) comprises a first sleeve-shaped portion (17) and a second tine-arm-carrying portion (18), the tine-arm-carrying portion (18) being partially located in the sleeve-shaped portion (17), and **in that** the weakened portion is provided **in that** part of the tine-arm-carrying portion (18) that is located outside the sleeve-shaped portion (17).

5. A device (1) as claimed in any one of the preceding claims, **characterized in that** the weakened portion (9) comprises at least one bore (10).

6. A device (1) as claimed in any one of the preceding claims, **characterized in that** the weakened portion (9) comprises at least one groove (11).

7. A device (1) as claimed in any one of the preceding claims, **characterized in that** there is provided a security means (16) on the tine arm (6), which security means (16) bridges the weakened portion (9).

8. A device (1) as claimed in claim 7, **characterized in that** the security means (16) is constituted by a chain.

9. A device (1) as claimed in claim 7, **characterized in that** the security means is constituted by a hinge.

10. A device (1) as claimed in any one of the preceding claims, **characterized in that** the crop is deposited at a distance at least corresponding to the working width of the rake member (3) outside the working path of the rake member (3).

11. A device (1) as claimed in any one of the preceding claims, **characterized in that** the rake member (3) has a central delivery.

12. A device (1) as claimed in any one of the preceding claims, **characterized in that** the device (1) is constituted by a motor-driven rake.

13. A device (1) as claimed in any one of the preceding claims, **characterized in that** the device (1) comprises a drawbar (2) which is supported, behind the rake member (3), by a bridge (5).

14. A device (1) as claimed in any one of the preceding claims, **characterized in that** the device (1) is provided with a gearbox with a preferably rearwardly outgoing shaft.
